(19) Europäisches Patentamt

European Patent Office

Office européen des brevets

(11) **EP 1 555 419 A1**

(12) # DEMANDE DE BREVET EUROPEEN

(43) Date de publication:
**20.07.2005 Bulletin 2005/29**

(51) Int Cl.⁷: **F02K 9/58**

(21) Numéro de dépôt: **03447307.4**

(22) Date de dépôt: **23.12.2003**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK**<br><br>(71) Demandeur: **Techspace Aero**<br>**4041 Milmort Herstal (BE)** | (72) Inventeur: **Saint-Mard, Michel**<br>**4602 Vise (BE)**<br><br>(74) Mandataire: **Van Malderen, Michel et al**<br>**Office van Malderen**<br>**85/043 Boulevard de la Sauvenière**<br>**4000 Liège (BE)** |

(54) **Procédé et dispositif pour optimiser la régulation de l'écoulement d'un fluide par adaptation de la perte de charge**

(57)     La présente invention se rapport à un procédé de régulation de l'écoulement d'un fluide, en particulier du débit ou de la pression du fluide, par ajustement de sa perte de charge dans un dispositif hydraulique ou pneumatique, caractérisé en ce qu'on met en oeuvre des moyens permettant, une fois le besoin en régulation fixé, de définir la plage de régulation satisfaisant à ce besoin, de préférence le centre et la largeur de ladite plage, en fonction du paramètre de régulation, lesdits moyens rendant la régulation essentiellement indépendante de l'actionneur utilisé pour l'ajustement de la perte de charge.

FIG.2.a

EP 1 555 419 A1

## Description

### Objet de l'invention

La présente invention se rapporte à un procédé de régulation optimisée suivant le besoin de l'écoulement d'un fluide (débit ou pression) via sa perte de charge dans un système de grilles en rotation.

Le système décrit dans le présent document est prévu initialement pour une application dans des systèmes de propulsion de véhicule spatiaux, tels que moteurs de fusée. Toutefois cette application pourrait être utilisée dans tout autre système hydraulique nécessitant une régulation de fluide particulière.

L'invention se rapporte également au dispositif à grille mobile spécialement adapté pour la mise en oeuvre du procédé.

### Arrière-plan technologique et état de la technique

Un dispositif de régulation de la perte de charge au moyen d'un système de grilles en rotation est connu et utilisé sur des moteurs de fusée.

Cependant, la fonction de ces équipements existants ne permet généralement une régulation que sur un domaine de perte de charge très faible.

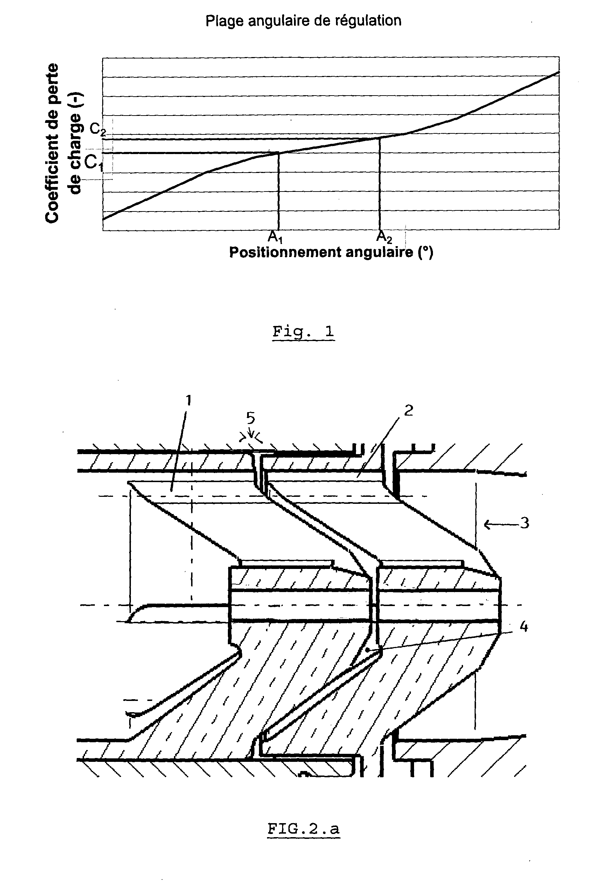

La figure 1 illustre un exemple de besoin de régulation qui correspond à une plage limitée de positions angulaires de l'équipement de régulation.

La caractéristique agissant sur la régulation est, dans cet exemple, la perte de charge de l'écoulement, ramenée à un coefficient de perte de charge. Le besoin du système à réguler se traduit par une variation de ce coefficient entre deux valeurs extrêmes C1 et C2.

Il y correspond une variation de la position angulaire de l'équipement de régulation entre A1 et A2. Toute position intermédiaire entre A1 et A2 doit être obtenue avec une précision suffisante. Cette précision doit être compatible avec le mécanisme de l'équipement de régulation.

Cette précision sera plus facilement atteinte si les variations du coefficient de perte de charge correspondent à une plage de variation progressive et régulière de la position angulaire, ce qui est le cas illustré par l'exemple.

Si l'on s'écarte de cette zone préférentielle par des angles supérieurs à A2 ou inférieurs à A1 , on obtiendra une régulation moins précise. L'imprécision du mécanisme induira des variations plus importantes du coefficient de perte de charge.

### Buts de l'invention

La présente invention vise à fournir une solution qui permette de s'affranchir des inconvénients de l'état de la technique.

En particulier, l'invention a pour but de s'adapter à différentes lois de variation de perte de charge en fonction du besoin, et ce quelque soit le type d'actionneur utilisé.

### Principaux éléments caractéristiques de l'invention

Un premier aspect de la présente invention se rapporte à un procédé de régulation de l'écoulement d'un fluide, en particulier du débit ou de la pression du fluide, par ajustement de sa perte de charge dans un dispositif hydraulique ou pneumatique, caractérisé en ce qu'on met en oeuvre des moyens permettant, une fois le besoin en régulation fixé, de définir la plage de régulation satisfaisant à ce besoin, de préférence le centre et la largeur de ladite plage, en fonction du paramètre de régulation, lesdits moyens rendant la régulation essentiellement indépendante de l'actionneur utilisé pour l'ajustement de la perte de charge.

En particulier, le besoin en régulation est la précision de la perte de charge ou la stabilité du point de fonctionnement.

Selon l'invention, lesdits moyens comprennent un obturateur à grilles disposé dans le chemin d'écoulement du fluide, présentant une grille fixe et une grille mobile rotative, séparées par une certaine distance, dite distance inter-grilles, l'ensemble définissant une section hydraulique de passage frontale et une section hydraulique de passage transversale entre les deux grilles.

Selon une première forme d'exécution avantageuse, la distance inter-grilles est choisie pour que la section frontale soit significativement plus grande que la section transversale sur la plage de régulation définie, la perte de charge étant essentiellement influencée par la position angulaire de la grille mobile.

Selon une deuxième forme d'exécution avantageuse, la distance inter-grilles est choisie pour que la section frontale soit du même ordre de grandeur que la section transversale sur la plage de régulation définie.

Selon une troisième forme d'exécution avantageuse, la distance inter-grilles est choisie pour que la section frontale soit significativement plus petite que la section transversale sur la plage de régulation définie, la perte de charge étant principalement influencée par la distance inter-grilles.

De préférence, le paramètre de régulation est la surface de passage frontale, ladite surface de passage frontale étant corrélée à la position angulaire de la grille mobile.

De préférence encore, la surface de passage frontale varie linéairement avec ladite position angulaire.

Avantageusement, on adopte une loi de régulation de type polynomiale pour la perte de charge en fonction de la position angulaire ou de la surface frontale de passage.

Un deuxième aspect de la présente invention concerne un dispositif de régulation de perte de charge d'un élément hydraulique ou pneumatique pour la mise en oeuvre du procédé décrit ci-dessus, comprenant de préférence un obturateur à grilles disposé dans le chemin d'écoulement du fluide, présentant une grille fixe et une grille mobile rotative, séparées par une certaine distance ajustable, dite distance inter-grilles, l'ensemble définissant une section hydraulique de passage frontale et une section hydraulique de passage transversale entre les deux grilles.

Ce dispositif et le procédé de régulation mis en oeuvre sont notamment destinés à la régulation d'un système hydraulique ou pneumatique dans un moteur de fusée.

## Brève description des figures

La figure 1, déjà mentionnée, représente schématiquement un exemple de besoin en régulation : perte de charge avec une grande précision demandée dans une plage angulaire déterminée.

La figure 2.a représente une vue en coupe dans un plan axial d'un exemple de dispositif à grille rotative, tel qu'utilisé dans le cadre de la présente invention

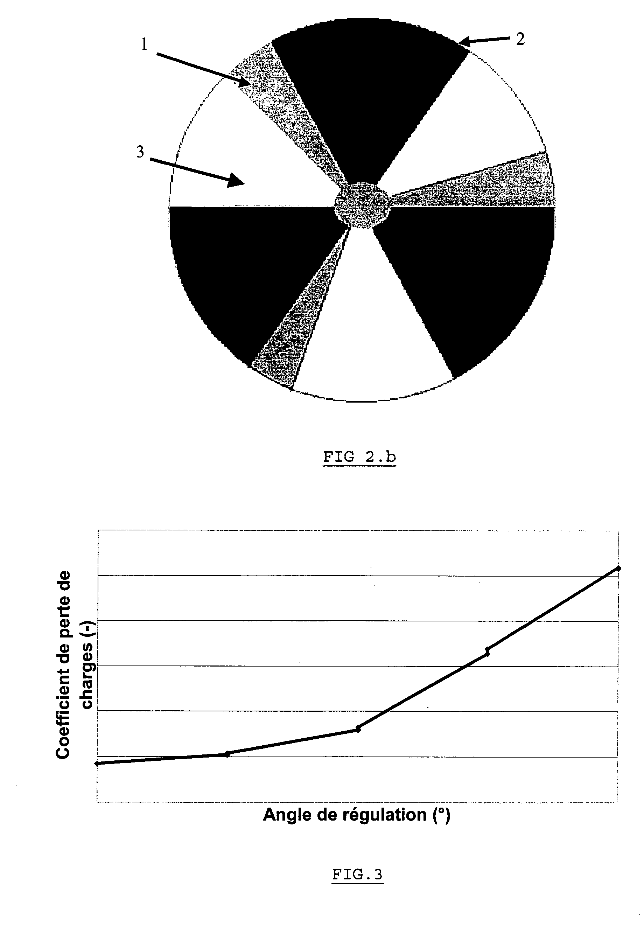

La figure 2.b représente schématiquement une vue en coupe transverse du dispositif de la figure 2.a

La figure 3 représente schématiquement l'influence de la position angulaire sur la perte de charge, en utilisant le dispositif de la figure 2.

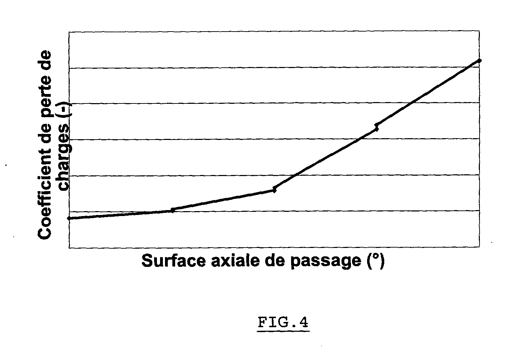

La figure 4 représente schématiquement l'influence de la surface frontale de passage du fluide sur perte de charge, en utilisant le dispositif de la figure 2.

## Description d'une forme d'exécution préférée de l'invention

### *Principe*

L'invention consiste à permettre la régulation via la perte de charges optimisée suivant le besoin pour tout ensemble hydraulique régulé. L'exemple présenté aux figures 2.a et 2.b comprend un système de deux grilles : une grille fixe 1 et une grille mobile 2.

La méthode originale décrite ci-après est destinée à optimiser la plage de variation progressive de la caractéristique souhaitée de l'équipement de régulation vis-à-vis du besoin de régulation imposé par le système. Dans le cas de l'exemple illustré sur la figure 1, cette optimisation est réalisée via la détermination de la géométrie idéale de l'obturateur de l'équipement.

### *Description technique*

Cette régulation via la perte de charge se fait en fonction du positionnement angulaire de la grille mobile.

Des essais ont montré que les courbes de perte de charge peuvent se partager en trois zones (Figures 2.a et 2.b).

I. zone d'influence de la position angulaire seule : dans cette zone, la section hydraulique de passage frontale 3 est significativement plus grande que la section de passage transversale 4, c'est-à-dire correspondant à un débit perpendiculaire à l'écoulement principal, disponible entre les deux grilles ;
II. zone d'influence intermédiaire : dans cette zone, les sections de passages frontale et transversale sont du même ordre de grandeur. Leurs influences sont donc du même ordre ;
III. zone d'influence de la distance inter-grilles 5 : dans cette zone, seule la section de passage transversale influence la perte de charge.

Connaissant ces trois types d'influences, il est possible de modifier la distance inter-grilles 5 de telle manière que l'on puisse majoritairement se trouver dans la zone I, II ou III.

Pour faire de la régulation sur la perte de charge, la zone la plus intéressante est bien évidemment la zone I puisqu'elle permet de faire un lien direct entre la position angulaire et la perte de charge. La figure 3 montre un exemple de test réalisé avec le système à grille rotative présenté à la figure 2.

On peut facilement constater de manière empirique, que dans la zone I, la perte de charge varie principalement en fonction de la surface frontale de passage pour des valeurs d'écoulement fixées (pression, débit, vitesse, etc.).

Il semble donc évident de pouvoir corréler la perte de charge directement en fonction de la surface de passage puisque la forme des grilles est connue. Dans le cas de la géométrie définie dans le dispositif de la figure 2, la surface de passage frontale varie linéairement en fonction de l'angle. La figure 3 peut donc exprimer l'influence de la perte de charge directement liée à son principal paramètre en modifiant l'échelle de variation angulaire par une échelle exprimant la surface frontale disponible, comme le montre la figure 4. On voit donc clairement que la variation de la perte de charge est directement liée à la loi de distribution de la section frontale de passage, ce qui revient à dire que modifier la géométrie des lumières de la grilles aura un impact direct sur la loi de perte de charge en fonction de la position angulaire.

Au vu des figures 3 et 4, on peut clairement mettre sous forme mathématique les relations suivantes. A titre d'exemple, on peut avoir le cas particulier suivant :

$$k = A \cdot \alpha^3 + B \cdot \alpha^2 + C \cdot \alpha + D \equiv f(\alpha) \qquad (1),$$

$k$ étant le coefficient de perte de charge et $\alpha$ étant la valeur de l'angle.

Sachant que pour le cas présenté sur la figure 2,

$$S(\alpha) = E \cdot \alpha + F \qquad (2),$$

où S étant la valeur de la surface frontale, on peut donc écrire:

$$k = A'\cdot S' + B'\cdot S^2 + C'\cdot S + D' \equiv g(S) \qquad (3),$$

ce qui fixe la loi de régulation. A, A', B, B', C, C', D, D', E et F sont des constantes provenant du "lissage" de la courbe obtenue par essais.

A la lumière de ce qui est exprimé dans les équations, il est possible d'obtenir un nombre infini de variations de perte de charge en fonction de la rotation angulaire. Ceci présente l'avantage évident de ne pas devoir contrôler de manière particulière la rotation de la grille, de mieux cibler le besoin (précision, stabilité d'un point de fonctionnement, etc.), tout en utilisant dans tous les cas de figure par exemple un contrôle linéaire de cette rotation plus simple à mettre en oeuvre et donc moins coûteux.

La présente invention présente comme avantage le fait que le besoin en régulation peut être satisfait en modifiant la géométrie des grilles de l'obturateur et ce de façon quasi-indépendante de l'actionneur utilisé. Ainsi, par exemple, en utilisant un dessin de grilles adéquat, on peut obtenir une meilleure précision de perte de charge, pour un actionneur donné. Ceci implique la possibilité de simplification de l'actionnement de l'équipement, avec une réduction de coût.

L'invention permet également de cibler des zones de travail, en fonction du besoin rencontré, comme par exemple augmenter la précision de la perte de charge à un endroit particulier. Ce système permet en plus l'utilisation d'un même équipement où seul le dessin de la section de passage des grilles peut être modifié pour atteindre une autre fonctionnalité.

## Revendications

1. Procédé de régulation de l'écoulement d'un fluide, en particulier du débit ou de la pression du fluide, par ajustement de sa perte de charge dans un dispositif hydraulique ou pneumatique, **caractérisé en ce qu'**on met en oeuvre des moyens permettant, une fois le besoin en régulation fixé, de définir la plage de régulation satisfaisant à ce besoin, de préférence le centre et la largeur de ladite plage, en fonction du paramètre de régulation, lesdits moyens rendant la régulation essentiellement indépendante de l'actionneur utilisé pour l'ajustement de la perte de charge.

2. Procédé selon la revendication 1, **caractérisé en ce que** le besoin en régulation est la précision de la perte de charge ou la stabilité du point de fonctionnement.

3. Procédé selon la revendication 1 ou 2, **caractérisé en ce que** lesdits moyens comprennent un obturateur à grilles disposé dans le chemin d'écoulement du fluide, présentant une grille fixe (1) et une grille mobile rotative (2), séparées par une certaine distance, dite distance inter-grilles (5), l'ensemble définissant une section hydraulique de passage frontale (3) et une section hydraulique de passage transversale (4) entre les deux grilles (1, 2).

4. Procédé selon la revendication 3, **caractérisé en ce que** la distance inter-grilles (5) est choisie pour que la section frontale (3) soit significativement plus grande que la section transversale (4) sur la plage de régulation définie, la perte de charge étant essentiellement influencée par la position angulaire de la grille mobile (2).

5. Procédé selon la revendication 3, **caractérisé en ce que** la distance inter-grilles (5) est choisie pour que la section frontale (3) soit du même ordre de grandeur que la section transversale (4) sur la plage de régulation définie.

6. Procédé selon la revendication 3, **caractérisé en ce que** la distance inter-grilles (5) est choisie pour que la section frontale (3) soit significativement plus petite que la section transversale (4) sur la plage de régulation définie, la perte de charge étant principalement influencée par la distance inter-grilles (5).

7. Procédé selon la revendication 4, **caractérisé en ce que** le paramètre de régulation est la surface de passage frontale (3), ladite surface de passage frontale étant corrélée à la position angulaire de la grille mobile.

8. Procédé selon la revendication 7, **caractérisé en ce que** la surface de passage frontale (3) varie linéairement avec ladite position angulaire.

9. Procédé selon la revendication 7 ou 8, **caractérisé en ce qu'**on adopte une loi de régulation de type polynomiale pour la perte de charge en fonction de la position angulaire ou de la surface frontale de passage.

10. Dispositif de régulation de perte de charge d'un élément hydraulique ou pneumatique pour la mise en oeuvre du procédé selon l'une quelconque des revendications précédentes, comprenant de préférence un obturateur à grilles disposé dans le chemin d'écoulement du fluide, présentant une grille fixe (1) et une grille mobile rotative (2), séparées

**EP 1 555 419 A1**

par une certaine distance ajustable (5), dite distance inter-grilles (5), l'ensemble définissant une section hydraulique de passage frontale (3) et une section hydraulique de passage transversale (4) entre les deux grilles (1, 2).

**11.** Utilisation du dispositif selon la revendication 10, pour la régulation d'un système hydraulique ou pneumatique dans un moteur de fusée.

Plage angulaire de régulation

Fig. 1

FIG.2.a

FIG 2.b

FIG.3

FIG.4

**EP 1 555 419 A1**

**Office européen**
**des brevets**

## RAPPORT DE RECHERCHE EUROPEENNE

Numéro de la demande

EP 03 44 7307

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 108 929 A (TECHSPACE AERO S A) 20 juin 2001 (2001-06-20) * alinéas [0003],[0026],[0031],[0032] * * figures * * revendications 1,5,7,9 * --- | 1-4,7,8, 10 | F02K9/58 |
| X | DE 44 25 345 A (ABB PATENT GMBH) 25 janvier 1996 (1996-01-25) * colonne 3, ligne 45 - colonne 4, ligne 61; figures * --- | 1-4,7,8, 10 | |
| X | US 3 759 091 A (REIMER R) 18 septembre 1973 (1973-09-18) * colonne 2, ligne 65 - colonne 3, ligne 57; figures * * revendication 1 * --- | 1-4 | |
| X | US 4 328 831 A (WOLFF ROBERT C) 11 mai 1982 (1982-05-11) * figures * * colonne 4, ligne 65 - colonne 5, ligne 60 * --- | 1-4 | DOMAINES TECHNIQUES RECHERCHES (Int.Cl.7) |
| X | US 5 409 351 A (GEIST RICHARD) 25 avril 1995 (1995-04-25) | 1-4 | F02K F02C F01D F16K |
| A | * colonne 5, ligne 30 - colonne 6, ligne 61; figures * ----- | 5-11 | |

Le présent rapport a été établi pour toutes les revendications

| Lieu de la recherche | Date d'achèvement de la recherche | Examinateur |
|---|---|---|
| MUNICH | 17 mai 2004 | Teissier, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

9

**ANNEXE AU RAPPORT DE RECHERCHE EUROPEENNE
RELATIF A LA DEMANDE DE BREVET EUROPEEN NO.**  EP 03 44 7307

La présente annexe indique les membres de la  famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre  indicatif et n'engagent pas la responsabilité  de l'Office européen des brevets.

17-05-2004

| Document brevet cité au rapport de recherche | | Date de publication | Membre(s) de la famille de brevet(s) | | Date de publication |
|---|---|---|---|---|---|
| EP 1108929 | A | 20-06-2001 | EP | 1108930 A1 | 20-06-2001 |
|  |  |  | EP | 1108929 A1 | 20-06-2001 |
| DE 4425345 | A | 25-01-1996 | DE | 4425345 A1 | 25-01-1996 |
| US 3759091 | A | 18-09-1973 | AUCUN | | |
| US 4328831 | A | 11-05-1982 | US | 3883269 A | 13-05-1975 |
|  |  |  | AR | 208298 A1 | 20-12-1976 |
|  |  |  | AU | 476406 B2 | 16-09-1976 |
|  |  |  | AU | 7483674 A | 06-05-1976 |
|  |  |  | BE | 821591 A1 | 17-02-1975 |
|  |  |  | BR | 7409141 A | 30-12-1975 |
|  |  |  | CA | 1021223 A1 | 22-11-1977 |
|  |  |  | DE | 2450037 A1 | 07-05-1975 |
|  |  |  | DK | 568974 A ,B, | 23-06-1975 |
|  |  |  | ES | 431759 A1 | 01-03-1977 |
|  |  |  | ES | 451139 A1 | 01-12-1977 |
|  |  |  | ES | 451140 A1 | 16-08-1977 |
|  |  |  | FI | 317374 A ,B, | 02-05-1975 |
|  |  |  | FR | 2256334 A1 | 25-07-1975 |
|  |  |  | GB | 1491717 A | 16-11-1977 |
|  |  |  | IT | 1024732 B | 20-07-1978 |
|  |  |  | JP | 50078076 A | 25-06-1975 |
|  |  |  | NL | 7414228 A | 06-05-1975 |
|  |  |  | NO | 743917 A | 26-05-1975 |
|  |  |  | SE | 420523 B | 12-10-1981 |
|  |  |  | SE | 7413724 A | 02-05-1975 |
|  |  |  | US | 4336763 A | 29-06-1982 |
|  |  |  | ZA | 7406664 A | 26-05-1976 |
| US 5409351 | A | 25-04-1995 | DE | 4214775 A1 | 11-11-1993 |
|  |  |  | DE | 59300445 D1 | 14-09-1995 |
|  |  |  | EP | 0568909 A1 | 10-11-1993 |

EPO FORM P0460

Pour tout renseignement concernant cette annexe : voir Journal Officiel de l'Office européen des  brevets, No.12/82